Europäisches Patentamt

European Patent Office

Office européen des brevets

(19)

(11) Publication number: **0 049 041**
**B1**

(12) **EUROPEAN PATENT SPECIFICATION**

(45) Date of publication of patent specification: **20.03.85**

(51) Int. Cl.⁴: $C\ 03\ C\ 8/02$, $C\ 03\ C\ 8/04$, $C\ 23\ D\ 5/02$

(21) Application number: **81303773.6**

(22) Date of filing: **19.08.81**

(54) Porcelain enamel frit.

(30) Priority: **29.09.80 JP 134213/80**

(43) Date of publication of application:
**07.04.82 Bulletin 82/14**

(45) Publication of the grant of the patent:
**20.03.85 Bulletin 85/12**

(84) Designated Contracting States:
**DE GB NL**

(56) References cited:
**EP-A-0 001 755**
**DD-A- 52 777**
**US-A-2 753 271**
**US-A-2 786 782**

**SOVIET INVENTIONS ILLUSTRATED, Section
CH, Week C33, September 24, 1980 DERWENT
PUBLICATIONS LTD, London L 02**

(73) Proprietor: **NGK INSULATORS, LTD.**
**2-56, Suda-cho, Mizuho-ku**
**Nagoya-shi, Aichi 467 (JP)**

(72) Inventor: **Ohmura, Akira**
**4-15, Chuodai 6-Chome**
**Kasugai City (JP)**
Inventor: **Nakano, Tadashi**
**19-1, Wagogaoka 2-Chome Togo-Cho**
**Aichi-Gun Aichi Pref. (JP)**

(74) Representative: **Whalley, Kevin et al**
**Marks & Clerk 57/60 Lincoln's Inn Fields**
**London WC2A 3LS (GB)**

Courier Press, Leamington Spa, England.

# 0 049 041

**Description**

The present invention relates to a porcelain enamel frit for sheet iron ground coat, which contains neither fluorine nor any fluorine compound.

Conventional porcelain enamel frits for sheet iron ground coat very often contain fluorine and fluorine compounds. This is because fluorine and fluorine compounds act as a flux in the production of porcelain enamel frit for sheet iron ground coat to promote the smelting of the raw material mixture, and act as a low melting point compound to lower the firing temperature for enamelling and to give good gloss to the resulting porcelain enamel. However, fluorine and fluorine compounds are very toxic and volatilize in air from the frit during the frit making and the firing for enamelling, and therefore the use of porcelain enamel frit containing fluorine or fluorine compounds is not preferable.

The present invention aims to provide a porcelain enamel frit for sheet iron ground coat, which does not contain fluorine or a fluorine compound, but is equal to or superior to conventional fluorine- or fluorine compound-containing porcelain enamel frit for sheet iron ground coat in respect of the smelting property of the frit, the low-temperature firing property upon enamelling, and the gloss of the resulting porcelain enamel.

The present invention provides a porcelain enamel frit for sheet iron ground coat, consisting of, in parts by weight, 100 parts of a main component consisting of 30—73 parts of $SiO_2$ or a mixture of $SiO_2$ and at least one of $TiO_2$, $ZrO_2$ and $SnO_2$, 8—45 parts of $B_2O_3$, and 8—41 parts of $Na_2O$ or a mixture of $Na_2O$ and at least one of $Li_2O$ and $K_2O$ (provided that, when the total amount of the mixture of $Na_2O$ and at least one of $Li_2O$ and $K_2O$ is assumed to be 100% by weight, the amount of $Na_2O$ is at least 45% by weight, that of $Li_2O$ is not more than 25% by weight, and that of $K_2O$ is not more than 50% by weight), and 7—42 parts of an auxiliary component consisting of 1.7 to 12 parts of $Al_2O_3$, 1—22 parts of at least one of CaO, BaO, ZnO, MgO and SrO (provided that the amount of each oxide is not more than 12 parts), from more than 0 part to 7 parts of $MoO_3$ or a mixture of $MoO_3$ and at least one of $V_2O_5$, $P_2O_5$ and $Sb_2O_3$, and 0.5—10 parts of at least one of CoO, NiO, CuO, MnO and $Fe_2O_3$.

That is, the present invention is based on the discovery that a porcelain enamel frit consisting of a main component and an auxiliary component in a specifically limited mixing ratio, the main component consisting of (1) a given amount of $SiO_2$ or a mixture of $SiO_2$ and at least one of $TiO_2$, $ZrO_2$ and $SnO_2$, (2) a given amount of $B_2O_3$, and (3) a given amount of $Na_2O$ or a mixture of $Na_2O$ and at least one of $Li_2O$ and $K_2O$, and the auxiliary component consisting of (4) a given amount of $Al_2O_3$, (5) a given amount of at least one of CaO, BaO, ZnO, MgO and SrO, (6) a given amount of $MoO_3$ or a mixture of $MoO_3$ and at least one of $V_2O_5$, $P_2O_5$ and $Sb_2O_3$, and (7) a given amount of at least one of CoO, NiO, CuO, $MnO_2$ and $Fe_2O_3$, is excellent in respect of the smelting property, the low-temperature firing property upon enamelling, the gloss of the resulting porcelain enamel and in respect of other properties as described above due to the synergistic effect of the main component and auxiliary component contained in the frit in a specifically limited mixing ratio, particularly due to the presence of $MoO_3$, $Na_2O$ and the like contained in the frit as essential components, in spite of the fact that the frit does not contain fluorine or a fluorine compound.

The present invention will be now explained in more detail.

It is necessary that the main component of the porcelain enamel frit of the present invention contains 30—73 parts (hereinafter "parts" mean parts by weight), preferably 35—66 parts, of $SiO_2$ or a mixture of $SiO_2$ and at least one of $TiO_2$, $ZrO_2$ and $SnO_2$; 8—45 parts, preferably 12—39 parts of $B_2O_3$; and 8—41 parts of $Na_2O$ or a mixture of $Na_2O$ and at least one of $Li_2O$ and $K_2O$, or preferably 13—35 parts of a mixture of $Na_2O$ and $Li_2O$, or a mixture of $Na_2O$, $Li_2O$ and $K_2O$.

That is, $SiO_2$ or a mixture of $SiO_2$ and at least one of $TiO_2$, $ZrO_2$ and $SnO_2$ is a basic component of the frit of the present invention. When the amount of $SiO_2$ or a mixture of $SiO_2$ and at least one of $TiO_2$, $ZrO_2$ and $SnO_2$ contained in a frit exceeds 73 parts, the frit has a high smelting temperture, and a high firing temperature is required, and hence the production of glossy flat porcelain enamel is difficult. On the other hand, when the amount of $SiO_2$ or a mixture of $SiO_2$ and at least one of $TiO_2$, $ZrO_2$ and $SnO_2$ contained in a frit is less than 30 parts, the frit is not chemically stable.

When the amount of $B_2O_3$ contained in a frit is less than 8 parts, a high firing temperature is required. On the other hand, when the amount of $B_2O_3$ contained in a frit exceeds 45 parts, the frit is not chemically stable.

When the amount of $Na_2O$ or a mixture of $Na_2O$ and at least one of $Li_2O$ and $K_2O$ contained in a frit is less than 8 parts, a very high firing temperature is required, and the thermal expansion coefficient of the resulting porcelain enamel coating is too low, and therefore when a sheet iron enamel is produced, the porcelain enamel coating is deformed to a large extent. On the other hand, when a frit contains more than 41 parts of $Na_2O$ or a mixture of $Na_2O$ and at least one of $Li_2O$ and $K_2O$, the frit is not chemically stable, and the resulting porcelain enamel coating has a thermal expansion coefficient much higher than that of sheet iron, and crazing of the porcelain enamel coating occurs. Further, in the above described mixture of $Na_2O$, $Li_2O$ and $K_2O$, the amount of each of $Na_2O$, $Li_2O$ and $K_2O$ must be such that, when the total amount of a mixture of $Na_2O$ and at least one of $Li_2O$ and $K_2O$ is assumed to be 100% by weight, the amount of $Na_2O$ is at least 45% by weight, preferably at least 55% by weight, the amount of $Li_2O$ is not more than 25% by weight, preferably from more than 0% by weight to not more than 16% by weight, and the amount of $K_2O$ is not more than 50% by weight, preferably not more than 40% by weight. These limitations are based on the

2

reason that, when a mixture of $SiO_2$ and at least one of $Li_2O$ and $K_2O$ contains less than 45% by weight of $Na_2O$, more than 50% by weight of $K_2O$ or more than 25% by weight of $Li_2O$, a high firing temperature is required, and the appearance of the resulting porcelain enamel is poor.

Further, it is necessary that the porcelain enamel frit for sheet iron ground coat of the present invention contains the following auxiliary components. That is, it is necessary that the frit contains 1.7 to 12 parts, preferably 3—10 parts, of $Al_2O_3$ as one of the auxiliary components in order to widen the firing range upon enamelling and to improve the mechanical strength of the resulting porcelain enamel. However, when a frit contains more than 12 parts of $Al_2O_3$, the smelting temperature of the frit is high and a high firing temperture is required, and the resulting porcelain enamel has a poor gloss. Therefore, the use of more than 12 parts of $Al_2O_3$ is not preferable.

When a frit contains 1—22 parts, preferably 2—18 parts, of at least one of CaO, BaO, ZnO, MgO and SrO, a porcelain enamel can be formed within a wide firing range without causing burning off. Therefore, a frit containing 1—22 parts of at least one of CaO, BaO, ZnO, MgO and SrO is used. When the amount of at least one of CaO, BaO, ZnO, MgO and SrO is less than 1 part, the firing range is narrow, and further the burning off is apt to occur at the enamelling. When the amount of at least one of CaO, BaO, ZnO, MgO and SrO exceeds 22 parts, the resulting porcelain enamel has a poor appearance. Also, the amount of each of CaO, BaO, ZnO, MgO and SrO must be not more than 12 parts because, when a frit contains more than 12 parts of any of these oxides, a high firing temperature is required, and the resulting porcelain enamel has a poor appearance.

Further, it is very important that the porcelain enamel frit contains from more than 0 part to 7 parts, preferably up to 5 parts, of $MoO_3$ or a mixture of $MoO_3$ and at least one of $V_2O_5$, $P_2O_5$ and $Sb_2O_3$ in order to lower the surface energy of the resulting porcelain enamel and to form a porcelain enamel coating having a flat surface and having an improved gloss. However, when a frit contains more than 7 parts of $MoO_3$ or a mixture of $MoO_3$ and at least one of $V_2O_5$, $P_2O_5$ and $Sb_2O_3$, the firing range is narrow and the resulting porcelain enamel has a poor appearance, and the use of more than 7 parts of $MoO_3$ or a mixture of $MoO_3$ and at least one of $V_2O_5$, $P_2O_5$ and $Sb_2O_3$ is not preferable. Further, $MoO_3$ must be contained in a frit as an essential component because $MoO_3$ is an indispensable component for improving the appearance, particularly the gloss and flatness of the resulting porcelain enamel coating, and for lowering the firing temperature.

Further the frit of the present invention must contain 0.5—10 parts, preferably 1—7 parts, of at least one of CoO, NiO, CuO, $MnO_2$ and $Fe_2O_3$, because these oxides are essential components for forming a porcelain enamel coating adhered tightly to a sheet iron. When, the amount of at least one of CoO, NiO, CuO, $MnO_2$ and $Fe_2O_3$ is less than 0.5 part, the effect of these oxides does not fully appear, and the resulting porcelain enamel coating chips from the sheet iron. On the other hand when the amount of these oxides exceeds 10 parts, the resulting porcelain enamel has a poor appearance. Therefore, the use of less than 0.5 part or more than 10 parts of these oxides is not preferable.

The amount of the auxiliary component must be 7—42 parts, preferably 11—37 parts, based on 100 parts of the main component. The main component is a basic component of a frit, that is an essential component for a frit to be formed into a vitreous enamel. However, a frit consisting only of the main component does not have sufficiently good properties necessary for the frit to be formed into enamel. That is, the frit cannot be fired at a temperature of not higher than about 900°C (the firing temperature for producing sheet iron enamel must be not higher than about 900°C), has a narrow firing temperature range upon enamelling, and the appearance of the resulting sheet iron enamel and the adherence of the enamel coating to the sheet iron are poor. Therefore, a frit must contain a given amount of 7—42 parts of the auxiliary component based on 100 parts of the main component. When a frit contains more than 42 parts of an auxiliary component, the frit is not chemically stable and the resulting porcelain enamel has a poor appearance. On the other hand, when a frit contains less than 7 parts of an auxiliary component, a high firing temperature is required, and the firing range upon enamelling is narrow. Therefore, the use of less than 7 parts or more than 42 parts of the auxiliary component based on 100 parts of the main component is not preferable.

A method for producing porcelain enamel frit according to the present invention for sheet iron ground coat and a method for producing sheet iron enamel by the use of the porcelain enamel frit will now be described. That is, raw material components for a porcelain enamel frit of the present invention for sheet iron ground coat are weighed and mixed in such a mixing ratio that the resulting frit has a given composition. The resulting raw material mixture is smelted at a temperature of 1,100—1,250°C for about 1 hour to decompose the raw material and to form a homogeneous smelted mixture. The smelted mixture is poured into water to quench the mixture, and the quenched mixture dried to obtain a porcelain enamel frit of the present invention. A sheet iron enamel can be produced by using the above obtained porcelain enamel frit by the same method as the method of producing conventional sheet iron enamel. That is, the frit is subjected to a mill addition according to the compounding recipe shown in the following Table 1, and the resulting mixture ground by means of a ball mill or the like to produce a slip.

TABLE 1

| | Amount (parts by weight) |
|---|---|
| Frit | 100 |
| Clay | 4—8 |
| Quartz | 0—15 |
| Borax (hydrated) | 0—1 |
| Sodium nitrite | 0.1—0.5 |
| Water | 40—50 |

Then, the slip is applied onto a sheet iron, which has previously been subjected to conventional pretreatments, by means of a spray gun or the like in an amount that an enamel coating having a thickness of about 70—90 µm would be formed on the sheet iron surface after firing, dried and then fired at a temperature of 700—880°C for about 1—4 minutes to obtain a sheet iron enamel.

The invention will be further described with reference to the following illustrative Example.

Raw material components for a porcelain enamel frit were weighed and mixed in such a mixing ratio that the resulting frit had a given composition shown in the following Table 3, the resulting mixture was smelted at a temperature of 1,200°C for 1 hour, and the smelted mixture was poured into water to obtain a porcelain enamel frit of the present invention. The resulting frit was subjected to a mill addition according to the compounding recipe shown in the following Table 2 to produce a slip. The slip was applied onto a sheet iron having a thickness of 0.8 mm and a dimension of 10 × 10 cm in an amount that an enamel coating having a thickness of 70 µm would be formed on the sheet iron surface after firing, and fired for 3 minutes at a temperature shown in Table 3 to obtain sheet iron enamels of samples Nos. 1—59.

TABLE 2

| | Amount (parts by weight) |
|---|---|
| Frit | 100 |
| Clay | 6 |
| Quartz | 5 |
| Borax (hydrated) | 0.5 |
| Sodium nitrite | 0.2 |
| Water | 45 |

For comparison, reference sheet iron enamels of samples Nos. 60—67 and conventional sheet iron enamels of sample Nos. 68—71 were produced. The resulting sheet iron enamels were compared with each other with respect to gloss, flatness and adherence. The obtained results are shown in Table 3. The gloss was measured at an angle of incidence of 60° by means of a digital glossimeter GM-3D made by Murakami Color Technical Laboratory Inc., and was shown by an average value of 5 measured values. The surface roughness was shown by the 10 point average roughness of the surface roughness testing method according to JIS B0601, wherein 2.5 mm was used as a standard length. The adherence was measured according to the testing method for adherence defined in ASTM C313, and was indicated by the adherence index (%).

4

TABLE 3(a)–1

| | No. | Main component (parts by weight) | | | | | | | | | Auxiliary component (parts by weight) | | | | | |
|---|---|---|---|---|---|---|---|---|---|---|---|---|---|---|---|---|
| | | $SiO_2$ | $TiO_2$ | $ZrO_2$ | $SnO_2$ | $B_2O_3$ | $Li_2O$ | $K_2O$ | $Na_2O$ | Total | $Al_2O_3$ | CaO | BaO | ZnO | MgO | SrO |
| Porcelain enamel frit of the present invention | 1 | 53.5 | 1.2 | — | 3.7 | 21.3 | 2.2 | 3.0 | 15.1 | 100.0 | 3.7 | 8.1 | — | 2.0 | 2.0 | 2.0 |
| | 2 | 35.0 | 1.8 | 1.8 | — | 29.0 | 6.8 | 10.0 | 15.6 | 100.0 | 4.2 | 7.7 | — | 2.0 | 4.7 | — |
| | 3 | 62.0 | — | — | 1.2 | 19.2 | 0.5 | 4.4 | 12.7 | 100.0 | 8.4 | 8.8 | 3.3 | 4.3 | — | — |
| | 4 | 36.5 | — | — | — | 33.6 | 3.0 | 3.0 | 23.9 | 100.0 | 6.4 | 7.3 | 4.5 | — | 4.7 | — |
| | 5 | 50.0 | — | — | — | 15.0 | 1.0 | 6.7 | 27.3 | 100.0 | 8.4 | 2.0 | — | 7.8 | — | — |
| | 6 | 42.7 | — | 6.0 | — | 21.1 | 5.4 | 1.8 | 23.0 | 100.0 | 8.2 | 2.0 | — | 6.7 | — | — |
| | 7 | 56.1 | — | — | — | 16.8 | 0.8 | 6.8 | 19.5 | 100.0 | 4.2 | 3.7 | 9.2 | — | — | 2.0 |
| | 8 | 45.2 | — | — | — | 29.1 | 2.6 | 5.1 | 18.0 | 100.0 | 4.0 | 4.5 | 2.5 | 2.0 | 2.0 | — |
| | 9 | 40.8 | — | — | — | 32.5 | 2.1 | 5.3 | 19.3 | 100.0 | 4.0 | 6.5 | — | 6.5 | — | — |
| | 10 | 62.7 | — | — | — | 14.8 | 2.2 | 2.2 | 18.1 | 100.0 | 3.5 | 2.0 | 8.0 | 5.0 | 3.2 | — |
| | 11 | 60.0 | 4.1 | — | — | 15.8 | 2.2 | 3.0 | 14.9 | 100.0 | 7.5 | 7.3 | 3.0 | 2.5 | — | 1.3 |
| | 12 | 40.0 | — | 5.0 | — | 34.7 | 0.6 | 6.1 | 13.6 | 100.0 | 6.5 | 2.5 | — | 8.3 | 3.1 | — |
| | 13 | 40.0 | 3.2 | — | — | 31.1 | 2.3 | 1.3 | 22.1 | 100.0 | 6.5 | — | 7.5 | 2.9 | 1.0 | — |
| | 14 | 40.0 | — | — | 0.8 | 32.5 | 6.1 | 5.1 | 15.5 | 100.0 | 2.0 | 6.2 | — | — | — | — |
| | 15 | 43.0 | — | — | — | 24.0 | 1.0 | 9.9 | 22.1 | 100.0 | 5.4 | 4.5 | — | 2.3 | 4.5 | — |
| | 16 | 58.4 | — | — | — | 21.3 | 1.0 | 9.5 | 9.8 | 100.0 | 2.0 | 9.1 | 6.0 | — | — | — |
| | 17 | 50.0 | 1.3 | 6.0 | — | 27.4 | 0.3 | 4.4 | 10.6 | 100.0 | 9.3 | 8.1 | — | 2.0 | — | — |
| | 18 | 57.3 | — | — | — | 27.4 | 1.1 | 2.0 | 12.2 | 100.0 | 5.6 | 9.2 | 1.0 | — | — | — |
| | 19 | 34.7 | — | — | — | 39.9 | 3.8 | — | 21.6 | 100.0 | 1.7 | 7.7 | 6.0 | — | 2.0 | — |
| | 20 | 48.7 | — | — | — | 21.1 | 0.6 | 3.6 | 26.0 | 100.0 | 6.5 | 4.5 | 4.5 | — | — | — |

0049041

TABLE 3(a)—2

| | No. | SiO$_2$ | TiO$_2$ | ZrO$_2$ | SnO$_2$ | B$_2$O$_3$ | Li$_2$O | K$_2$O | Na$_2$O | Total | Al$_2$O$_3$ | CaO | BaO | ZnO | MgO | SrO |
|---|---|---|---|---|---|---|---|---|---|---|---|---|---|---|---|---|
| | | Main component (parts by weight) | | | | | | | | | Auxiliary component (parts by weight) | | | | | |
| Porcelain enamel frit of the present invention | 21 | 54.1 | — | 2.0 | — | 16.8 | 0.5 | 3.0 | 23.6 | 100.0 | 3.9 | 2.0 | 6.0 | 1.0 | — | — |
| | 22 | 45.0 | — | 13.2 | — | 19.8 | 2.6 | 5.5 | 13.9 | 100.0 | 5.0 | 4.2 | — | — | — | — |
| | 23 | 40.0 | — | 5.0 | — | 34.7 | 2.4 | 6.9 | 11.0 | 100.0 | 8.4 | 9.2 | — | — | — | 3.7 |
| | 24 | 37.2 | — | 2.8 | — | 23.6 | 3.6 | 3.6 | 29.2 | 100.0 | 6.5 | 8.8 | — | — | — | — |
| | 25 | 57.3 | — | — | — | 27.4 | 2.3 | — | 13.0 | 100.0 | 3.8 | 2.3 | 6.0 | 5.0 | — | — |
| | 26 | 45.3 | — | 7.3 | — | 26.0 | 1.7 | — | 19.7 | 100.0 | 5.7 | 8.9 | — | — | 7.0 | — |
| | 27 | 31.8 | — | — | — | 34.2 | 0.7 | 1.0 | 32.3 | 100.0 | 11.5 | 6.5 | 2.0 | 2.0 | — | 1.0 |
| | 28 | 47.2 | — | — | — | 36.0 | 2.5 | — | 14.3 | 100.0 | 9.5 | 2.5 | 7.9 | — | — | — |
| | 29 | 46.4 | — | — | — | 27.6 | 0.3 | 3.3 | 22.4 | 100.0 | 3.8 | 7.7 | 4.7 | — | — | 2.1 |
| | 30 | 40.0 | — | — | — | 23.6 | 7.6 | 11.3 | 17.5 | 100.0 | 6.5 | 2.0 | 4.7 | — | — | 1.0 |
| | 31 | 64.5 | — | — | — | 20.0 | 1.4 | 0.8 | 13.3 | 100.0 | 4.4 | 4.2 | 11.3 | — | 3.0 | — |
| | 32 | 45.2 | — | — | — | 31.7 | 3.5 | — | 19.6 | 100.0 | 9.5 | 4.9 | 2.0 | 1.0 | 2.0 | — |
| | 33 | 38.6 | — | — | — | 29.0 | 0.6 | 2.6 | 29.2 | 100.0 | 5.0 | 3.8 | 6.9 | 2.2 | — | — |
| | 34 | 36.5 | — | — | — | 33.6 | 0.9 | 7.5 | 21.5 | 100.0 | 9.5 | 3.8 | 2.5 | 2.3 | — | 4.0 |
| | 35 | 60.0 | 0.7 | 0.5 | 1.5 | 14.8 | 2.5 | 7.0 | 13.0 | 100.0 | 7.5 | 4.5 | 2.0 | — | — | 5.9 |
| | 36 | 56.1 | — | — | — | 16.8 | 2.4 | 1.4 | 23.3 | 100.0 | 8.2 | 4.3 | 2.5 | 2.5 | — | — |
| | 37 | 65.0 | — | — | — | 14.6 | 2.4 | 7.0 | 11.0 | 100.0 | 4.2 | 2.7 | 2.0 | 2.0 | — | — |
| | 38 | 63.2 | 1.0 | 1.0 | — | 17.2 | 0.7 | 2.5 | 14.4 | 100.0 | 4.2 | 4.5 | 3.0 | 1.5 | — | — |
| | 39 | 40.0 | — | — | 0.8 | 32.5 | 0.5 | 9.3 | 16.9 | 100.0 | 5.4 | 2.5 | 6.0 | 6.0 | — | — |

0049041

TABLE 3(a)—3

| | No. | SiO$_2$ | TiO$_2$ | ZrO$_2$ | SnO$_2$ | B$_2$O$_3$ | Li$_2$O | K$_2$O | Na$_2$O | Total | Al$_2$O$_3$ | CaO | BaO | ZnO | MgO | SrO |
|---|---|---|---|---|---|---|---|---|---|---|---|---|---|---|---|---|
| | | | | Main component<br>(parts by weight) | | | | | | | Auxiliary component<br>(parts by weight) | | | | | |
| | 40 | 50.0 | — | — | — | 24.0 | 1.0 | 3.6 | 21.4 | 100.0 | 4.0 | 2.5 | 2.5 | — | — | — |
| | 41 | 31.8 | — | — | — | 34.2 | — | 2.4 | 31.6 | 100.0 | 2.0 | — | — | 5.2 | — | — |
| | 42 | 45.2 | 1.5 | 2.0 | — | 21.1 | 3.0 | 3.0 | 24.2 | 100.0 | 10.0 | 3.2 | — | — | — | 0.8 |
| | 43 | 48.2 | 1.8 | — | — | 15.0 | 5.3 | — | 29.7 | 100.0 | 7.5 | 4.5 | — | 2.5 | — | — |
| | 44 | 40.0 | 1.4 | 5.0 | — | 27.6 | 6.0 | 4.9 | 15.1 | 100.0 | 9.5 | 2.5 | — | — | 5.3 | — |
| | 45 | 55.4 | 2.0 | 14.0 | — | 11.3 | 2.9 | 4.5 | 9.9 | 100.0 | 2.0 | 5.8 | — | 9.3 | — | 5.9 |
| | 46 | 45.0 | — | — | — | 34.7 | 1.6 | — | 18.7 | 100.0 | 10.4 | 4.2 | 6.2 | 7.3 | — | — |
| Porcelain enamel frit of the present invention | 47 | 52.6 | — | — | — | 26.0 | 0.4 | 3.9 | 17.1 | 100.0 | 7.3 | 2.5 | 1.0 | 8.8 | — | — |
| | 48 | 54.1 | 3.3 | 1.0 | — | 21.3 | 0.2 | 1.2 | 18.9 | 100.0 | 5.6 | 8.1 | — | — | — | 2.1 |
| | 49 | 40.0 | — | — | — | 34.3 | 1.3 | 4.6 | 19.8 | 100.0 | 7.5 | 4.2 | 6.3 | 2.1 | — | — |
| | 50 | 58.7 | — | 3.3 | — | 18.0 | 1.0 | 7.0 | 12.0 | 100.0 | 6.8 | 5.8 | 2.5 | 2.5 | 4.0 | — |
| | 51 | 40.0 | 2.8 | — | — | 31.5 | — | 6.7 | 19.0 | 100.0 | 5.5 | 6.2 | 7.5 | 3.9 | 3.3 | — |
| | 52 | 61.3 | — | — | — | 16.2 | 0.4 | 7.9 | 14.2 | 100.0 | 3.9 | 2.5 | — | 2.5 | — | — |
| | 53 | 45.2 | — | 7.4 | — | 26.0 | 1.1 | 3.8 | 16.5 | 100.0 | 4.2 | 3.8 | 6.0 | — | — | — |
| | 54 | 46.2 | — | — | 1.0 | 40.0 | 2.2 | 2.1 | 8.5 | 100.0 | 8.4 | — | 6.0 | 6.0 | — | — |
| | 55 | 40.0 | 1.4 | 5.0 | — | 27.6 | 3.9 | 3.4 | 18.7 | 100.0 | 4.1 | 1.0 | 2.0 | 3.0 | — | — |
| | 56 | 51.0 | — | — | — | 14.0 | 1.7 | 3.5 | 29.8 | 100.0 | 10.0 | 2.5 | 8.7 | — | 1.0 | — |
| | 57 | 36.5 | — | — | — | 33.6 | 4.5 | 3.9 | 21.5 | 100.0 | 11.0 | 6.6 | 1.7 | 8.9 | — | — |
| | 58 | 46.2 | — | — | 1.0 | 40.0 | — | 3.3 | 9.5 | 100.0 | 11.5 | 6.3 | 5.4 | — | — | 8.6 |
| | 59 | 35.0 | 1.8 | 1.8 | — | 29.0 | 1.3 | 4.5 | 26.6 | 100.0 | 5.3 | 2.2 | 11.2 | — | — | — |

0049041

TABLE 3(a)—4

| | No. | Main component (parts by weight) | | | | | | | | | Auxiliary component (parts by weight) | | | | | |
|---|---|---|---|---|---|---|---|---|---|---|---|---|---|---|---|---|
| | | $SiO_2$ | $TiO_2$ | $ZrO_2$ | $SnO_2$ | $B_2O_3$ | $Li_2O$ | $K_2O$ | $Na_2O$ | Total | $Al_2O_3$ | CaO | BaO | ZnO | MgO | SrO |
| Reference porcelain enamel frit | 60 | 71.8 | 3.0 | — | — | 11.2 | 4.6 | 1.4 | 8.0 | 100.0 | 7.5 | 5.7 | 2.5 | 1.0 | — | — |
| | 61 | 38.0 | 0.7 | — | — | 47.4 | 0.6 | 0.6 | 12.7 | 100.0 | 6.3 | 4.7 | 2.0 | 9.0 | 9.0 | — |
| | 62 | 30.0 | — | 5.0 | — | 18.3 | 5.6 | 21.0 | 20.1 | 100.0 | 4.4 | 3.7 | 1.0 | — | — | — |
| | 63 | 28.1 | — | — | — | 40.1 | 5.7 | 1.9 | 24.2 | 100.0 | 4.1 | 3.7 | 2.5 | 2.5 | 2.3 | — |
| | 64 | 54.3 | 2.1 | 2.0 | — | 21.3 | 7.5 | 6.1 | 6.7 | 100.0 | 12.9 | 6.7 | 5.2 | 5.2 | 8.0 | — |
| | 65 | 50.0 | 0.6 | — | 2.0 | 26.0 | 2.6 | 9.6 | 9.2 | 100.0 | 16.3 | 3.5 | 3.5 | 7.8 | — | — |
| | 66 | 49.5 | 1.7 | 14.0 | — | 17.2 | 0.5 | 4.4 | 12.7 | 100.0 | 11.0 | 9.6 | 2.6 | 5.9 | — | 4.6 |
| | 67 | 40.0 | — | — | — | 23.6 | 3.3 | 1.8 | 31.3 | 100.0 | 5.5 | 5.2 | 2.0 | 1.0 | — | — |
| Conventional porcelain enamel frit | 68 | 48.7 | — | — | — | 21.1 | — | 2.1 | 28.1 | 100.0 | 12.5 | 6.9 | 1.7 | 3.0 | 1.0 | — |
| | 69 | 46.4 | — | — | — | 27.6 | — | 15.6 | 10.4 | 100.0 | 9.5 | 8.5 | — | — | — | — |
| | 70 | 36.5 | — | — | — | 33.6 | — | 1.5 | 28.4 | 100.0 | 7.2 | 7.3 | — | — | 0.5 | — |
| | 71 | 58.1 | — | 8.4 | — | 20.0 | 2.0 | — | 11.5 | 100.0 | — | 3.5 | 6.2 | — | — | — |

0 0 4 9 0 4 1

TABLE 3(b)—1

| | No. | Auxiliary component (parts by weight) | | | | | | | | | | | Firing temperature (°C) | Gloss (%) | Surface roughness (μm) | Adherence (%) |
|---|---|---|---|---|---|---|---|---|---|---|---|---|---|---|---|---|
| | | $MoO_3$ | $V_2O_5$ | $P_2O_5$ | $Sb_2O_3$ | CoO | NiO | CuO | $MnO_2$ | $Fe_2O_3$ | F | Total | | | | |
| Porcelain enamel frit of the present invention | 1 | 0.8 | 0.7 | 0.5 | — | 1.0 | 0.3 | — | — | 0.1 | — | 21.2 | 800 | 86 | 2.0 | 83 |
| | 2 | 0.8 | 3.5 | 2.0 | — | — | 1.5 | — | 0.5 | 0.5 | — | 27.4 | 720 | 80 | 1.5 | 85 |
| | 3 | 1.6 | 0.3 | — | — | — | 2.5 | 1.0 | 0.5 | — | — | 30.7 | 840 | 83 | 2.1 | 80 |
| | 4 | 1.8 | 0.2 | — | — | 0.5 | — | — | 2.5 | — | — | ·27.9 | 760 | 83 | 1.9 | 80 |
| | 5 | 0.3 | — | — | — | 0.3 | 1.1 | — | — | 0.7 | — | 20.6 | 780 | 80 | 2.0 | 91 |
| | 6 | 0.5 | — | 2.0 | 1.0 | — | 1.0 | — | 0.3 | — | — | 21.7 | 800 | 75 | 2.0 | 82 |
| | 7 | 3.0 | — | 0.5 | — | — | 1.6 | — | 0.3 | — | — | 24.5 | 780 | 87 | 1.9 | 86 |
| | 8 | 0.8 | 0.8 | 1.0 | — | 0.6 | 2.0 | — | 0.4 | 0.2 | — | 20.8 | 760 | 82 | 1.7 | 90 |
| | 9 | 0.2 | — | 0.6 | 0.5 | — | 0.9 | — | — | 0.3 | — | 19.5 | 760 | 82 | 2.4 | 85 |
| | 10 | 0.3 | 2.0 | 0.2 | — | 0.3 | 0.6 | — | — | 0.3 | — | 25.4 | 840 | 78 | 2.4 | 83 |
| | 11 | 0.5 | — | 1.0 | 1.5 | — | 0.6 | — | 1.5 | — | — | 26.7 | 860 | 83 | 2.5 | 82 |
| | 12 | 0.1 | 0.3 | — | — | 0.9 | 0.3 | — | 1.6 | — | — | 23.6 | 760 | 80 | 2.2 | 87 |
| | 13 | 0.5 | — | 0.6 | 0.6 | — | 1.5 | 0.5 | 4.5 | — | — | 26.1 | 750 | 84 | 1.8 | 92 |
| | 14 | 0.7 | — | — | — | 0.9 | — | — | 0.2 | — | — | 10.0 | 750 | 82 | 2.3 | 84 |
| | 15 | 1.5 | 1.5 | — | — | — | 1.5 | — | 4.1 | — | — | 25.3 | 730 | 85 | 1.6 | 87 |
| | 16 | 0.4 | 3.9 | — | — | 1.0 | 0.3 | 0.5 | — | — | — | 23.2 | 820 | 77 | 1.9 | 85 |
| | 17 | 2.8 | — | — | 1.0 | 0.5 | 0.3 | — | 0.5 | — | — | 24.5 | 820 | 86 | 1.9 | 82 |
| | 18 | 1.6 | 0.3 | 0.3 | — | 0.6 | 0.6 | 0.3 | — | 0.1 | — | 19.6 | 820 | 84 | 2.0 | 86 |
| | 19 | 1.0 | — | 0.5 | — | — | 0.6 | — | — | 0.2 | — | 19.7 | 720 | 75 | 2.4 | 75 |
| | 20 | 2.5 | — | 0.5 | 0.5 | 0.9 | 1.0 | 0.3 | 0.5 | 0.2 | — | 21.9 | 770 | 85 | 1.5 | 90 |

TABLE 3(b)—2

| | No. | Auxiliary component (parts by weight) | | | | | | | | | | Firing temperature (°C) | Gloss (%) | Surface roughness (μm) | Adherence (%) |
| | | MoO$_3$ | V$_2$O$_5$ | P$_2$O$_5$ | Sb$_2$O$_3$ | CoO | NiO | CuO | MnO$_2$ | Fe$_2$O$_3$ | F | Total | | | | |
|---|---|---|---|---|---|---|---|---|---|---|---|---|---|---|---|---|
| Porcelain enamel frit of the present invention | 21 | 0.8 | — | — | — | 0.7 | 0.5 | — | — | — | — | 14.9 | 820 | 84 | 1.6 | 88 |
| | 22 | 2.7 | — | 1.1 | — | 1.2 | — | — | 1.0 | — | — | 15.2 | 850 | 82 | 2.5 | 84 |
| | 23 | 1.8 | — | 2.0 | — | 0.5 | 0.3 | — | 2.0 | 0.9 | — | 28.8 | 750 | 77 | 2.9 | 84 |
| | 24 | 0.5 | — | 0.3 | — | 1.0 | 0.5 | — | 2.0 | — | — | 19.6 | 760 | 80 | 2.4 | 88 |
| | 25 | 0.2 | 0.3 | 0.5 | 0.5 | — | 1.2 | 0.3 | — | — | — | 20.1 | 830 | 80 | 2.0 | 83 |
| | 26 | 0.1 | 2.0 | 2.0 | — | 1.6 | — | — | — | 0.2 | — | 27.5 | 810 | 80 | 2.5 | 90 |
| | 27 | 0.1 | 0.5 | — | — | 0.3 | 0.3 | — | 0.3 | — | — | 24.5 | 710 | 76 | 2.4 | 82 |
| | 28 | 1.6 | 0.4 | — | — | 1.7 | 0.3 | — | 0.4 | 0.5 | — | 24.8 | 780 | 82 | 2.0 | 90 |
| | 29 | 0.5 | — | 0.6 | — | 1.0 | 1.0 | — | — | — | — | 21.4 | 760 | 81 | 1.6 | 85 |
| | 30 | 3.0 | — | 0.3 | 0.5 | 0.5 | 0.5 | — | 0.4 | — | — | 19.4 | 740 | 83 | 1.6 | 85 |
| | 31 | 1.5 | 0.5 | 0.5 | — | 0.5 | 1.1 | 0.3 | 0.2 | — | — | 27.5 | 860 | 83 | 2.4 | 86 |
| | 32 | 3.0 | — | — | — | — | 1.6 | — | — | — | — | 24.0 | 700 | 85 | 2.4 | 82 |
| | 33 | 3.5 | — | — | — | 0.6 | 0.9 | — | 1.9 | — | — | 24.8 | 750 | 82 | 2.3 | 92 |
| | 34 | 1.5 | 1.6 | 0.3 | 2.9 | 1.0 | — | — | 0.3 | 0.1 | — | 29.8 | 750 | 79 | 1.5 | 85 |
| | 35 | 1.8 | — | 0.6 | — | 0.6 | — | — | 1.0 | — | — | 23.9 | 820 | 83 | 2.0 | 82 |
| | 36 | 0.4 | 3.1 | — | 0.5 | — | 2.0 | — | 1.1 | 1.1 | — | 25.7 | 800 | 81 | 1.8 | 84 |
| | 37 | 0.8 | 2.0 | — | — | 0.5 | 0.7 | — | 0.3 | — | — | 15.2 | 840 | 80 | 3.0 | 82 |
| | 38 | 4.6 | — | — | — | 0.3 | — | — | 0.9 | — | — | 19.0 | 840 | 86 | 2.3 | 76 |
| | 39 | 3.3 | 0.2 | 0.1 | — | — | 1.5 | — | — | — | — | 25.0 | 730 | 87 | 1.9 | 78 |

TABLE 3(b)-3

| | No. | Auxiliary component (parts by weight) | | | | | | | | | | | Firing temperature (°C) | Gloss (%) | Surface roughness ($\mu$m) | Adherence (%) |
| | | $MoO_3$ | $V_2O_5$ | $P_2O_5$ | $Sb_2O_3$ | CoO | NiO | CuO | $MnO_2$ | $Fe_2O_3$ | F | Total | | | | |
|---|---|---|---|---|---|---|---|---|---|---|---|---|---|---|---|---|
| Porcelain enamel frit of the present invention | 40 | 0.5 | — | 1.0 | — | — | 0.8 | 0.2 | — | — | — | 11.5 | 740 | 81 | 2.4 | 86 |
| | 41 | 0.5 | — | — | — | 0.5 | 0.3 | — | — | — | — | 8.5 | 720 | 79 | 2.4 | 76 |
| | 42 | 0.8 | — | 0.5 | 0.5 | — | 1.9 | — | 0.8 | — | — | 18.5 | 780 | 86 | 2.0 | 86 |
| | 43 | 1.8 | 0.2 | 0.6 | — | 0.7 | 1.1 | — | 4.5 | — | — | 23.4 | 760 | 80 | 1.6 | 91 |
| | 44 | 2.7 | — | 0.6 | — | — | 1.0 | — | 1.0 | — | — | 22.6 | 760 | 78 | 1.7 | 80 |
| | 45 | 0.2 | — | 1.0 | — | 0.9 | — | — | — | 0.5 | — | 25.6 | 850 | 77 | 3.6 | 77 |
| | 46 | 3.0 | — | 1.0 | 0.5 | 0.7 | 0.5 | 2.0 | 3.0 | — | — | 38.8 | 740 | 76 | 1.8 | 90 |
| | 47 | 0.8 | 1.0 | 1.0 | — | 1.0 | 0.3 | 0.3 | — | — | — | 24.0 | 780 | 84 | 1.7 | 88 |
| | 48 | 0.4 | — | 1.0 | — | — | 1.2 | — | — | — | — | 18.4 | 830 | 80 | 2.4 | 84 |
| | 49 | 1.0 | 0.5 | — | — | 1.0 | 0.5 | — | 0.4 | — | — | 23.5 | 730 | 86 | 1.8 | 90 |
| | 50 | 0.5 | 1.5 | — | 0.5 | — | 1.7 | 0.2 | 0.5 | — | — | 26.5 | 860 | 80 | 2.0 | 85 |
| | 51 | 3.3 | 1.5 | — | — | — | 1.0 | — | 2.5 | — | — | 34.7 | 740 | 79 | 2.5 | 84 |
| | 52 | 0.8 | — | — | — | — | 2.1 | 0.3 | 0.5 | — | — | 12.6 | 850 | 81 | 2.4 | 83 |
| | 53 | 4.7 | 0.2 | — | 1.0 | — | 0.9 | — | 1.0 | 0.2 | — | 22.0 | 800 | 78 | 2.2 | 80 |
| | 54 | 3.7 | — | — | — | — | 2.0 | — | — | 0.7 | — | 26.8 | 780 | 80 | 2.0 | 83 |
| | 55 | 0.5 | — | — | 1.2 | — | 1.5 | — | — | — | — | 13.3 | 770 | 81 | 2.0 | 85 |
| | 56 | 4.0 | 0.5 | — | — | — | 0.8 | — | 0.5 | — | — | 28.0 | 750 | 83 | 1.5 | 81 |
| | 57 | 0.2 | 0.5 | 0.3 | — | — | 1.5 | 0.5 | 3.0 | — | — | 34.2 | 740 | 80 | 1.8 | 90 |
| | 58 | 1.8 | 0.7 | 1.0 | — | 0.3 | 2.0 | 0.5 | 1.7 | — | — | 39.8 | 790 | 76 | 2.3 | 89 |
| | 59 | 1.7 | 0.2 | — | — | 0.5 | 0.5 | 1.0 | 2.3 | — | — | 24.9 | 730 | 84 | 1.6 | 91 |

TABLE 3(b)—4

| | No. | Auxiliary component (parts by weight) | | | | | | | | | | | Firing temperature (°C) | Gloss (%) | Surface roughness ($\mu$m) | Adherence (%) |
|---|---|---|---|---|---|---|---|---|---|---|---|---|---|---|---|---|
| | | $MoO_3$ | $V_2O_5$ | $P_2O_5$ | $Sb_2O_3$ | CoO | NiO | CuO | $MnO_2$ | $Fe_2O_3$ | F | Total | | | | |
| Reference porcelain enamel frit | 60 | — | 1.5 | 0.3 | — | 0.5 | 0.6 | — | 0.5 | — | — | 20.1 | 880 | 68 | 6.5 | 80 |
| | 61 | — | — | — | — | 0.3 | 1.0 | 0.2 | 1.0 | — | — | 33.5 | 790 | 70 | 2.2 | 78 |
| | 62 | — | 0.5 | 0.3 | — | 0.2 | 1.5 | — | — | 0.3 | — | 11.9 | 700 | | (crazing) | |
| | 63 | — | — | — | — | — | 0.5 | — | 0.1 | — | — | 15.7 | | (firing is impossible) | | |
| | 64 | — | — | — | — | 0.2 | — | — | 5.0 | — | — | 43.2 | 840 | 65 | 5.2 | 82 |
| | 65 | — | — | — | 0.5 | 0.3 | 0.5 | — | — | — | — | 32.4 | 860 | 67 | 3.4 | 72 |
| | 66 | — | — | 0.6 | — | — | 0.2 | 0.5 | 4.1 | — | — | 39.1 | 850 | 70 | 2.5 | 79 |
| | 67 | — | — | — | — | 0.3 | — | — | — | — | — | 14.0 | 740 | 68 | 2.0 | 63 |
| Conventional porcelain enamel frit | 68 | — | — | — | — | 0.3 | 1.5 | — | — | — | 2.5 | 29.4 | 770 | 82 | 2.2 | 85 |
| | 69 | — | — | — | — | 1.0 | 2.0 | — | — | — | 4.1 | 25.1 | 760 | 69 | 1.8 | 87 |
| | 70 | — | — | 0.5 | — | — | 1.3 | 0.2 | 2.0 | 0.2 | 3.3 | 22.5 | 740 | 81 | 1.9 | 85 |
| | 71 | — | — | — | — | 1.0 | 0.3 | — | 1.0 | — | 2.0 | 14.0 | 850 | 80 | 2.5 | 83 |

0049041

**0 049 041**

It can be seen from Table 3 that the sheet iron enamel produced by the use of the porcelain enamel frit of the present invention is equal to or superior to sheet iron enamels produced by the use of conventional porcelain enamel frit containing fluorine or a fluorine compound in respect of gloss, flatness and adherence.

In general, porcelain enamel frits for sheet iron ground coat are often used in the form of a mixture of several frits. In this case, frits having different firing temperatures are generally mixed. Of course, the porcelain enamel frits of the present invention can be used in the form of a mixture.

As described above, the porcelain enamel frit according to the present invention for sheet iron ground coat does not contain harmful fluorine or fluorine compounds, but has a smelting property, low-temperature firing property, gloss, flatness and adherence equal to or superior to those of conventional porcelain enamel frits which contain fluorine or fluorine compounds, due to the synergistic effect of the components contained in the frit, particularly due to the specifically limited amounts of $MoO_3$, $Li_2O$ and $Na_2O$ contained in the frit. Therefore, the porcelain enamel frit of the present invention may be advantageously used as a porcelain enamel frit for sheet iron ground coat without toxicity.

**Claims**

1. A porcelain enamel frit for sheet iron ground coat, characterized by consisting of, in parts by weight, 100 parts of a main component consisting of 30—73 parts of $SiO_2$ or a mixture of $SiO_2$ and at least one of $TiO_2$, $ZrO_2$ and $SnO_2$, 8—45 parts of $B_2O_3$, and 8—41 parts of $Na_2O$ or a mixture of $Na_2O$ and at least one of $Li_2O$ and $K_2O$, wherein when the total amount of the mixture of $Na_2O$ and at least one of $Li_2O$ and $K_2O$ is assumed to be 100% by weight, the amount of $Na_2O$ is at least 45% by weight, that of $Li_2O$ is not more than 25% by weight and that of $K_2O$ is not more than 50% by weight, and 7—42 parts of an auxiliary component consisting of 1.7 to 12 parts of $Al_2O_3$, 1—22 parts of at least one of CaO, BaO, ZnO, MgO and SrO wherein the amount of each oxide is not more than 12 parts, from more than 0 part to 7 parts of $MoO_3$ or a mixture of $MoO_3$ and at least one of $V_2O_5$, $P_2O_5$ and $Sb_2O_3$, and 0.5—10 parts of at least one of CoO, NiO, CuO, $MnO_2$ and $Fe_2O_3$.

2. A porcelain enamel frit as claimed in Claim 1, characterized in that the amount of the auxiliary component is 11—37 parts by weight based on 100 parts by weight of the amount of the main component.

3. A porcelain enamel frit as claimed in Claim 1 or 2, characterized in that the main component contains 35—66 parts of $SiO_2$ or a mixture of $SiO_2$ and at least one of $TiO_2$, $ZrO_2$ and $SnO_2$.

4. A porcelain enamel frit as claimed in any of Claims 1 to 3, characterized in that the main component contains 12—39 parts of $B_2O_3$.

5. A porcelain enamel frit as claimed in any of claims 1 to 4, characterized in that the main component contains 13—35 parts of a mixture of $Na_2O$ and $Li_2O$ or a mixture of $Na_2O$, $Li_2O$ and $K_2O$.

6. A porcelain enamel frit as claimed in any of claims 1 to 5, characterized in that the auxiliary component contains 3—10 parts of $Al_2O_3$.

7. A porcelain enamel frit as claimed in any of claims 1 to 6, characterized in that the auxiliary component contains 2—18 parts of at least one of CaO, BaO, ZnO, MgO and SrO.

8. A porcelain enamel frit as claimed in any of claims 1 to 7, characterized in that the auxiliary component contains up to 5 parts of $MoO_3$ or a mixture of $MoO_3$ and at least one of $V_2O_5$, $P_2O_5$ and $Sb_2O_3$.

9. A porcelain enamel frit as claimed in any of claims 1 to 8, characterized in that the auxiliary component contains 1—7 parts of at least one of CoO, NiO, CuO, $MnO_2$ and $Fe_2O_3$.

**Patentansprüche**

1. Porzellan-Email-Fritte als Grundbeschichtung für Eisenblech, dadurch gekennzeichnet, daß sie, in Gewichtsprozent ausgedrückt, besteht aus 100 Teilen einer Hauptkomponente bestehend aus 30 bis 73 Teilen $SiO_2$ oder einer Mischung aus $SiO_2$ und wenigstens einer Verbindung aus der Gruppe $TiO_2$, $ZrO_2$ und $SnO_2$, 8 bis 45 Teilen $B_2O_3$ und 8 bis 41 Teilen $Na_2O$ oder einer Mischung aus $Na_2O$ und wenigstens einer Verbindung aus der Gruppe $Li_2O$ und $K_2O$, worin, wenn man die Gesamtmenge der Mischung aus $Na_2O$ und wenigstens einer Verbindung aus der Gruppe $Li_2O$ und $K_2O$ mit 100 Gew.-% annimmt, die Menge an $Na_2O$ wenigstens 45 Gew.-%, die von $Li_2O$ nicht mehr als 25 Gew.-% und die von $K_2O$ nicht mehr als 50 Gew.-% ausmacht, und einer Hilfskomponente bestehend aus 1,7 bis 12 Teilen $Al_2O_3$, 1 bis 22 Teilen wenigstens einer Verbindung aus der Gruppe CaO, BaO, ZnO, MgO und SrO, worin die Menge von jedem Oxid nicht mehr als 12 Teile beträgt, mehr als 0 Teile bis 7 Teile $MoO_3$ oder einer Mischung von $MoO_3$ und wenigstens einer Verbindung aus der Gruppe $V_2O_5$, $P_2O_5$ und $Sb_2O_3$, und 0,5 bis 10 Teilen wenigstens einer Verbindung aus der Gruppe CoO, NiO, CuO, $MnO_2$ und $Fe_2O_3$.

2. Porzellan-Email-Fritte gemäß Anspruch 1, dadurch gekennzeichnet, daß die Menge an der Hilfskomponente 11 bis 37 Gew.-%, bezogen auf 100 Gew.-Teile der Menge der Hauptkomponente, beträgt.

3. Porzellan-Email-Fritte gemäß Ansprüchen 1 oder 2, dadurch gekennzeichnet, daß die Hauptkomponente 35 bis 66 Teile $SiO_2$ oder eine Mischung aus $SiO_2$ und wenigstens einer Verbindung aus der Gruppe $TiO_2$, $ZrO_2$ und $SnO_2$ enthält.

4. Porzellan-Email-Fritte gemäß einem der Ansprüche 1 bis 3, dadurch gekennzeichnet, daß die Hauptkomponente 12 bis 39 Teile $B_2O_3$ enthält.

13

5. Porzellan-Email-Fritte gemäß einem der Ansprüche 1 bis 4, dadurch gekennzeichnet, daß die Hauptkomponente 13 bis 35 Teile einer Mischung aus $Na_2O$ und $Li_2O$ oder einer Mischung aus $Na_2O$, $Li_2O$ und $K_2O$ enthält.

6. Porzellan-Email-Fritte gemäß einem der Ansprüche 1 bis 5, dadurch gekennzeichnet, daß die Hilfskomponente 3 bis 10 Teile $Al_2O_3$ enthält.

7. Porzellan-Email-Fritte gemäß einem der Ansprüche 1 bis 6, dadurch gekennzeichnet, daß die Hilfskomponente 2 bis 18 Teile wenigstens einer Verbindung aus der Gruppe von CaO, BaO, ZnO, MgO und SrO enthält.

8. Porzellan-Email-Fritte gemäß einem der Ansprüche 1 bis 7, dadurch gekennzeichnet, daß die Hilfskomponente bis zu 5 Teile $MoO_3$ oder einer Mischung von $MoO_3$ mit wenigstens einer Verbindung aus der Gruppe $V_2O_5$, $P_2O_5$ und $Sb_2O_3$ enthält.

9. Porzellan-Email-Fritte gemäß einem der Ansprüche 1 bis 8, dadurch gekennzeichnet, daß die Hilfskomponente 1 bis 7 Teile wenigstens einer Verbindung aus der Gruppe CoO, NiO, CuO, $MnO_2$ und $Fe_2O_3$ enthält.

## Revendications

1. Une fritte d'émail porcelaine pour revêtement de fond en tôle, caractérisée en ce que cette fritte, en partie en poids, se compose de 100 parties d'un composant principal consistant en 30—73 parties de $SiO_2$ ou d'un mélange de $SiO_2$ et d'au moins un des oxydes $TiO_2$, $ZrO_2$ et $SnO_2$, en 8—45 parties de $B_2O_3$ et en 8—41 parties de $Na_2O$ ou d'un mélange de $Na_2O$ et d'au moins un des oxydes $Li_2O$ et $K_2O$, dans lequel, lorsque la quantité totale du mélange de $Na_2O$ et d'au moins un des oxydes $Li_2O$ et $K_2O$ est présumée représenter 100% en poids, la quantité de $Na_2O$ est d'au moins 45% en poids, celle du $Li_2O$ n'est pas supérieure à 25% en poids, et celle du $K_2O$ n'est pas supérieure à 50% en poids, ladite fritte incluant également 7—42 parties d'un composant auxiliaire consistant en 1,7 à 12 parties de $Al_2O_3$, 1—22 parties d'au moins un des oxydes CaO, BaO, ZnO, MgO et SrO, la quantité de chaque oxyde n'étant pas supérieure à 12 parties, et en plus de 0 partie à 7 parties de $MoO_3$ ou d'un mélange de $MoO_3$ et d'au moins un des oxydes $V_2O_5$, $P_2O_5$ et $Sb_2O_3$, et en 0,5—10 parties d'au moins un des oxydes CoO, NiO, CuO, $MnO_2$ et $Fe_2O_3$.

2. Une fritte d'émail porcelaine comme revendiqué dans la revendication 1, caractérisée en ce que la quantité du composant auxiliaire est 11—37 parties en poids, en se basant sur 100 parties en poids de la quantité de composant principal.

3. Une fritte d'émail porcelaine comme revendiqué dans la revendication 1 ou 2, caractérisée en ce que le composant principal contient 35—66 parties de $SiO_2$ ou d'un mélange de $SiO_2$ et d'au moins un des oxydes de $TiO_2$, $ZrO_2$ et $SnO_2$.

4. Une fritte d'émail porcelaine comme revendiqué dans une quelconque des revendications 1 à 3 caractérisée en ce que le composant principal contient 12—39 parties de $B_2O_3$.

5. Une fritte d'émail porcelaine comme revendiqué dans une quelconque des revendications 1 à 4, caractérisée en ce que le composant principal contient 13—35 parties d'un mélange de $Na_2O$ et de $Li_2O$ et un mélange de $Na_2O$, $Li_2O$ et $K_2O$.

6. Une fritte d'émail porcelaine comme revendiqué dans une quelconque des revendications 1 à 5, caractérisé en ce que le composant auxiliaire contient 3—10 parties de $Al_2O_3$.

7. Une fritte d'émail porcelaine comme revendiqué dans une quelconque des revendications 1 à 6, caractérisée en ce que le composant auxiliaire contient 2—18 parties d'au moins un des oxydes CaO, BaO, ZnO, MgO et SrO.

8. Une fritte d'émail porcelaine comme revendiqué dans une quelconque des revendications 1 à 7, caractérisée en ce que le composant auxiliaire contient jusqu'à 5 parties de MnO, ou un mélange de MnO et d'au moins un des oxydes $V_2O_5$, $P_2O_5$ et $Sb_2O_3$.

9. Une fritte d'émail porcelaine comme revendiqué dans une quelconque des revendications 1 à 8, caractérisée en ce que le composant auxiliaire contient 1—7 parties d'au moins un des oxydes CoO, NiO, CuO, $MnO_2$ et $Fe_2O_3$.